# FASCICULE DE BREVET EUROPEEN

(11) **EP 4 341 116 B1**
(45) Date de publication et mention de la délivrance du brevet: **25.06.2025**
(21) Numéro de dépôt: 22729693.6
(22) Date de dépôt: 20.05.2022
(51) Int. Cl.: B60K 11/04, B60K 11/08, F01P 11/10, F01P 7/10

(54) **MODULE DE REFROIDISSEMENT POUR VÉHICULE AUTOMOBILE ÉLECTRIQUE OU HYBRIDE À TURBOMACHINE TANGENTIELLE**
KÜHLMODUL FÜR EIN ELEKTRO- ODER HYBRIDKRAFTFAHRZEUG MIT EINER TANGENTIALFLUSSTURBOMASCHINE
COOLING MODULE FOR AN ELECTRIC OR HYBRID MOTOR VEHICLE, HAVING A TANGENTIAL-FLOW TURBOMACHINE

(30) Priorité: 20.05.2021 FR 2105249
(43) Date de publication de la demande: 27.03.2024
(73) Titulaire: VALEO SYSTEMES THERMIQUES, 78320 Le Mesnil Saint-Denis (FR)
(72) Inventeur: MAMMERI, Amrid, 78320 Le Mesnil-Saint-Denis (FR); AZZOUZ, Kamel, 78320 Le Mesnil-Saint-Denis (FR); GARNIER, Sebastien, 78320 Le Mesnil-Saint-Denis (FR); TRAORE, Issiaka, 78320 Le Mesnil-Saint-Denis (FR)
(74) Mandataire: Valeo Systèmes Thermiques
(86) Numéro de dépôt international: PCT/EP2022/063702
(87) Numéro de publication internationale: WO 2022/243503

(56) Documents cités:
- WO-A1-2021/228495
- DE-A1- 102018 126 453
- JP-U- H04 100 572
- JP-U- S 591 612

## Description

La présente invention se rapporte à un module de refroidissement pour véhicule automobile électrique ou hybride, à turbomachine tangentielle.

Un module de refroidissement (ou module d'échange de chaleur) d'un véhicule automobile comporte classiquement au moins un échangeur de chaleur et un dispositif de ventilation adapté à générer un flux d'air au contact du au moins un échangeur de chaleur. Ce dispositif de ventilation se présente par exemple sous la forme d'une turbomachine tangentielle. Il permet ainsi, par exemple, de générer un flux d'air au contact de l'échangeur chaleur, à l'arrêt du véhicule ou à faible vitesse de roulage.

Classiquement, la face avant du module de refroidissement par laquelle le flux d'air pénètre à l'intérieur dudit module est placée en regard d'au moins une baie de refroidissement formée dans la face avant de la carrosserie du véhicule automobile et généralement protégée par une calandre.

Cependant, les véhicules électriques sont de préférence munis uniquement de baies de refroidissement situées sous le pare-chocs, car le moteur électrique n'a pas besoin d'être alimenté en air. Le véhicule automobile peut être muni d'une unique baie de refroidissement située sous le pare-chocs, voire ne pas comporter de baie de refroidissement du tout. L'on peut plus particulièrement imaginer un véhicule automobile électrique dépourvue d'une calandre.

La diminution du nombre de baies de refroidissement et l'éventuelle absence d'une calandre au niveau de la face avant du véhicule automobile permettent entre autres d'améliorer les caractéristiques aérodynamiques du véhicule électrique. Ceci se traduit également par une meilleure autonomie et une plus grande vitesse de pointe du véhicule automobile. Cependant, l'absence d'une calandre peut faire obstacle à la circulation de l'air dans le module de refroidissement, ce qui peut alors fortement diminuer ses performances.

Un module de refroidissement présentant un carénage dont la face avant est disposée en vis-à-vis d'un soubassement d'un véhicule automobile est aussi connu du document DE 10 2018 126453 A1.

Le but de la présente invention est donc de remédier au moins partiellement aux inconvénients de l'art antérieur et de proposer un module de refroidissement amélioré permettant de faire circuler un flux d'air à travers le ou les échangeurs même en l'absence d'une calandre et/ou d'une baie de refroidissement au sein du véhicule automobile.

La présente invention concerne donc un module de refroidissement pour véhicule automobile à moteur électrique ou hybride, ledit module de refroidissement étant destiné à être traversé par un flux d'air circulant entre une entrée d'air et une sortie d'air, le module de refroidissement comportant un carénage formant un conduit interne suivant une direction longitudinale du module de refroidissement à l'intérieur duquel est disposé au moins un échangeur de chaleur destiné à être traversé par le flux d'air, le carénage comportant une face avant dans laquelle est aménagée l'entrée d'air située en amont du au moins un échangeur de chaleur, le module de refroidissement comportant également un boîtier collecteur disposé en aval du carénage suivant la direction longitudinale, ledit boîtier collecteur étant configuré pour recevoir une turbomachine tangentielle elle-même configurée pour générer le flux d'air destiné à être évacué par la sortie d'air, le module de refroidissement comprenant également un moyen de fixation disposé de part et d'autre du carénage, ledit moyen de fixation permettant la fixation du au moins une échangeur de chaleur au module de refroidissement et permettant la fixation dudit module et du au moins un échangeur de chaleur à un châssis d'un véhicule automobile de sorte que la face avant du carénage soit disposée en vis-à-vis d'un soubassement du véhicule automobile.

L'invention peut en outre comprendre un ou plusieurs des aspects suivants pris seuls ou en combinaison :
- le moyen de fixation comporte au moins une barre latérale fixée sur chaque paroi latérale du carénage ;
- ladite barre latérale est orientée perpendiculairement au plan du au moins un échangeur de chaleur ;
- ledit au moins un échangeur de chaleur est fixé auxdites barres latérales ;
- lesdites barres latérales sont également configurées pour être fixées avec le châssis du véhicule automobile ;
- les barres latérales sont destinées à être fixées directement sur des poutres du châssis passant de part et d'autre dudit module de refroidissement ;
- le moyen de fixation comporte une pièce de liaison destinée à relier les barres latérales et des poutres du châssis passant de part et d'autre dudit module de refroidissement ;
- l'entrée d'air se présente sous la forme d'au moins une ouverture d'aspiration aménagée dans la face avant du carénage du module de refroidissement ;
- le module de refroidissement comporte au moins un dispositif d'obturation mobile entre une position d'ouverture et une position de fermeture de ladite au moins une ouverture d'aspiration ;
- le au moins un dispositif d'obturation comporte au moins un volet pivotant configuré pour pivoter autour d'un axe de pivotement et destiné à obturer la au moins une ouverture d'aspiration ;
- le module de refroidissement comporte une unité de pilotage configurée pour piloter le dispositif d'obturation ;
- l'unité de pilotage est configurée pour piloter chaque volet pivotant de manière indépendante ;
- le au moins un dispositif d'obturation comporte une multitude de volets pivotants ayant des tailles variées ; et
- en position ouverte, le au moins un dispositif d'obturation fait saillie par rapport à la face avant du carénage de sorte à former un déflecteur d'air destiné à dévier le flux d'air pénétrant à travers la au moins une ouverture d'aspiration vers l'intérieur du conduit du carénage.

L'invention concerne également un véhicule automobile comportant un tel module de refroidissement. L'invention peut en outre comprendre un ou plusieurs des aspects suivants pris seuls ou en combinaison :
- à l'état monté, la direction longitudinale du module de refroidissement est comprise dans un plan généré par un axe vertical et un axe longitudinal d'un trièdre rattaché au véhicule d'automobile ;
- à l'état monté, la direction longitudinale du module de refroidissement s'étend verticalement ; et
- le soubassement est pourvu d'au moins une ouverture disposée en regard de l'entrée d'air du module de refroidissement de manière à permettre la circulation d'un flux d'air depuis l'extérieur du véhicule automobile à l'intérieur du module de refroidissement.

D'autres caractéristiques et avantages de la présente invention apparaîtront plus clairement à la lecture de la description suivante, fournie à titre illustratif et non limitatif, et des dessins annexés dans lesquels :
[Fig 1] la figure 1 montre une représentation schématique partielle de l'avant d'un véhicule automobile vu de côté ; et
[Fig 2] la figure 2 montre une représentation schématique partielle détaillée de l'avant d'un véhicule automobile vu de côté avec un module de refroidissement suivant un premier mode de réalisation ; et
[Fig 3] la figure 3 est une figure similaire à la figure 2 et montre une représentation schématique partielle détaillée de l'avant d'un véhicule automobile vu de côté avec un module de refroidissement suivant un deuxième mode de réalisation.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

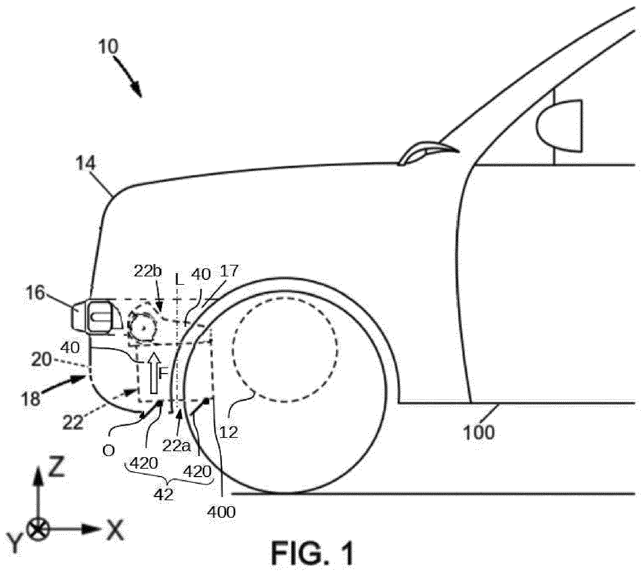

Sur les figures 1 à 3 est représenté un trièdre XYZ afin de définir l'orientation des différents éléments les uns des autres. Une première direction, notée X, correspond à une direction longitudinale du véhicule. Elle correspond également à une direction inverse à la direction d'avancement du véhicule. Une deuxième direction, notée Y, est une direction latérale ou transversale. Enfin, une troisième direction, notée Z, est verticale. Les directions, X, Y, Z sont orthogonales deux à deux.

Sur l'ensemble des figures, le module de refroidissement selon la présente invention est illustré dans une position fonctionnelle, c'est-à-dire quand il est disposé au sein d'un véhicule automobile.

La figure 1 illustre de manière schématique la partie avant d'un véhicule automobile 10 électrique ou hybride pouvant comporter un moteur 12 électrique ou hybride. Le véhicule 10 comporte notamment une carrosserie 14 et un pare-chocs 16 portés par un châssis 17 (représenté partiellement sur la figure 1) du véhicule automobile 10. Un module de refroidissement 22 est disposé derrière le pare-chocs 16 et en regard du soubassement 100 du véhicule automobile 10. Optionnellement, la carrosserie 14 peut définir une baie de refroidissement 18, c'est-à-dire une ouverture à travers la carrosserie 14. Une calandre 20 peut éventuellement protéger ce module de refroidissement 22.

Le module de refroidissement 22 est destiné à être traversé par un flux d'air F (représenté par une flèche sur la figure 1) circulant depuis une entrée d'air 22a vers une sortie d'air 22b suivant une direction longitudinale L du module de refroidissement 22. Dans la présente demande, on qualifie un élément d'en « amont » ou d'en « aval » selon la direction longitudinale L du module de refroidissement 22, un élément qui est respectivement disposé plus proche de l'entrée d'air 22a ou plus proche de la sortie d'air 22b qu'un autre élément.

De manière similaire, on entend par « supérieur » et « inférieur » ou « au-dessus » et « en-dessous » une orientation selon la direction Z du trièdre XYZ rattaché au véhicule automobile 10. Un élément dit supérieur ou au-dessus d'un autre sera plus proche du toit du véhicule 10 et un élément dit inférieur ou en-dessous d'un autre sera plus proche du soubassement 100.

Selon cette convention, une face avant 400 comportant l'entrée d'air 22a par laquelle le flux d'air F est destiné à entrer à l'intérieur dudit module 22 est disposée en vis-à-vis du soubassement 100 du véhicule automobile 10 tandis que la face arrière comportant la sortie d'air 22b par laquelle le flux d'air F est destiné à ressortir du module de refroidissement 22 est située au-dessus de la face avant 400. La face avant 400 et la face arrière sont par exemple orientées perpendiculairement à l'axe vertical Z du trièdre XYZ.

Le soubassement 100 est pourvu d'au moins une ouverture O disposée en regard de l'entrée d'air 22a du module de refroidissement 22 de manière à permettre la circulation d'un flux d'air F depuis l'extérieur du véhicule automobile 10 à l'intérieur du module de refroidissement 22. Placer une ouverture O au niveau du soubassement 100 du véhicule automobile 10 permet plus particulièrement de puiser l'air disponible à cet endroit pour générer le flux d'air F destiné à traverser le module de refroidissement 22 sans altérer la carrosserie 14 du véhicule 10.

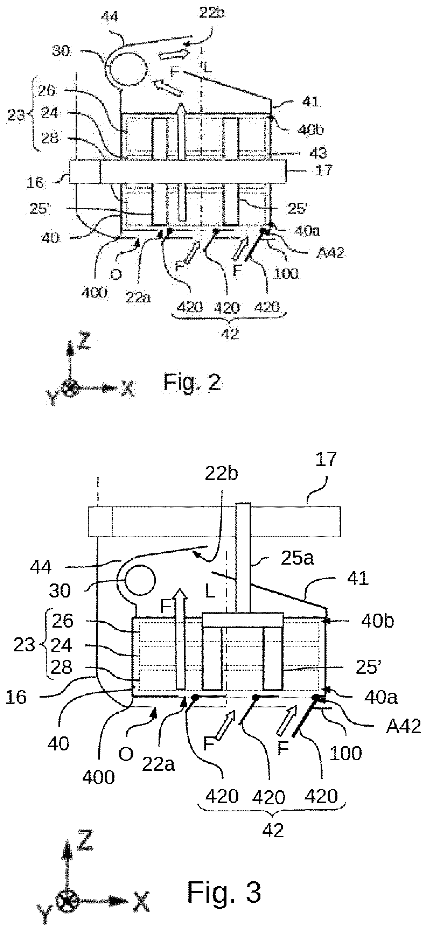

Concernant le module de refroidissement 22, celui-ci comporte essentiellement un carénage 40 formant un conduit interne à l'intérieur duquel est disposé au moins un échangeur de chaleur 24, 26, 28, comme illustré plus particulièrement sur la figure 2. La face avant 400 sert ainsi de base au carénage 40 et l'entrée d'air 22a se situe alors en amont du au moins un échangeur de chaleur 24, 26, 28. Le conduit interne s'étend entre une extrémité amont 40a et une extrémité avale 40b opposées l'une à l'autre, l'extrémité amont 40a étant orientée vers le soubassement 100 du véhicule 10.

Selon un mode de réalisation particulier du module de refroidissement 22, celui-ci comporte au moins deux échangeurs de chaleur 24, 26, 28 empilés dans le conduit interne suivant la direction longitudinale L dudit module. Sur la figure 2, le module de refroidissement 22 comprend trois échangeurs de chaleur 24, 26, 28 regroupés au sein d'un ensemble d'échangeurs de chaleur 23. Il pourrait toutefois en comporter plus ou moins suivant la configuration souhaitée.

Un premier échangeur de chaleur 24 peut par exemple être configuré pour relâcher de l'énergie calorifique du flux d'air F. Ce premier échangeur de chaleur 24 peut plus particulièrement être un condenseur connecté à un circuit de refroidissement (non représenté), par exemple afin de refroidir les batteries du véhicule 10. Ce circuit de refroidissement peut par exemple être un circuit de climatisation apte à refroidir les batteries ainsi qu'un flux d'air interne à destination de l'habitacle du véhicule automobile.

Un deuxième échangeur de chaleur 26 peut également être configuré pour relâcher de l'énergie calorifique dans le flux d'air F. Ce deuxième échangeur de chaleur 26 peut plus particulièrement être un radiateur connecté à un circuit de gestion thermique (non représenté) d'éléments électriques tel que le moteur électrique 12.

Le premier échangeur de chaleur 24 étant généralement un condenseur d'un circuit de climatisation, ce dernier a besoin que le flux d'air F soit le plus « frais » possible en mode climatisation. Pour cela, le deuxième échangeur de chaleur 26 est de préférence disposé en aval du premier échangeur de chaleur 24 dans le sens de circulation du flux d'air F. Il est néanmoins tout à fait possible d'imaginer que le deuxième échangeur de chaleur 26 soit disposé en amont du premier échangeur de chaleur 24.

Le troisième échangeur de chaleur 28 peut lui aussi être configuré pour relâcher de l'énergie calorifique dans le flux d'air. Ce troisième échangeur de chaleur 28 peut plus particulièrement être un radiateur connecté à un circuit de gestion thermique (non représenté), pouvant être distinct de celui connecté au deuxième échangeur de chaleur 26, pour des éléments électriques tel que l'électronique de puissance. Il est également tout à fait possible d'imaginer que le deuxième 26 et le troisième 28 échangeur de chaleur soient connectés à un même circuit de gestion thermique, par exemple connectés en parallèle l'un de l'autre.

Toujours selon l'exemple illustré sur la figure 2, le deuxième échangeur de chaleur 26 est disposé au-dessus du premier échangeur de chaleur 24 tandis que le troisième échangeur de chaleur 28 est disposé en-dessous du premier échangeur de chaleur 24. D'autres configurations peuvent néanmoins être envisageables comme par exemple les deuxième 26 et troisième 28 échangeurs de chaleurs disposés tous les deux au-dessus ou tous les deux en-dessous du premier échangeur de chaleur 24.

Dans le mode de réalisation illustré sur cette même figure, chacun des échangeurs de chaleur 24, 26, 28 présente une forme générale parallélépipédique déterminée par une largeur, une épaisseur et une hauteur. La largeur s'étend le long de la direction Y, l'épaisseur le long de la direction Z et la hauteur dans la direction X. Les échangeurs de chaleur 24, 26, 28 s'étendent alors selon un plan général perpendiculaire à la direction verticale Z. Les échangeurs de chaleur 24, 26, 28 sont donc perpendiculaires au flux d'air F destiné à les traverser.

La forme du au moins un échangeur de chaleur 24, 26, 28 dicte également les formes globales du carénage 40 et du conduit interne formé par celui-ci. Le carénage 40 comporte par exemple quatre parois de jonction délimitant un conduit interne de section carrée ou rectangulaire. Selon des modes de réalisation non illustrés sur les figures, le conduit interne du carénage 40 et le boîtier collecteur 41 peuvent avoir une section de forme différente de celle d'un quadrilatère. Cette section peut notamment prendre la forme d'un hexagone (dans ce cas le carénage 40 comporte six parois de jonction), d'un octogone (dans ce cas le carénage 40 comporte huit parois de jonction) ou encore une forme circulaire (dans ce cas le carénage 40 et le boîtier est de forme cylindrique et comporte une seule paroi latérale qui forme le manteau du cylindre). La section du conduit interne du carénage 40 dépend donc principalement de la géométrie du au moins un échangeur de chaleur 24, 26, 28 disposé à l'intérieur de celui-ci.

Le module de refroidissement 22 comporte également un boîtier collecteur 41 disposé au-dessus du carénage 40 et de l'ensemble 23 d'échangeurs de chaleur 24, 26, 28. Plus précisément, le boîtier collecteur 41 est juxtaposé à l'extrémité aval 40b du carénage 40, il est donc aligné avec le carénage 40 suivant l'axe longitudinal L du module de refroidissement 22. Ce boîtier collecteur 41 comporte la sortie d'air 22b destinée à refouler le flux d'air F. Le boîtier collecteur 41 permet ainsi de récupérer le flux d'air F traversant l'ensemble d'échangeurs de chaleur 23 et d'orienter ce flux d'air F vers la sortie d'air 22b, ceci est notamment illustré par les flèches représentant le flux d'air F sur la figure 2. Le boîtier collecteur 41 peut venir de matière avec le carénage 40 ou bien être une pièce rapportée fixée à l'extrémité avale 40b dudit carénage 40.

Le module de refroidissement 22, plus précisément le boîtier collecteur 41, comprend également au moins un ventilateur tangentiel, aussi nommé turbomachine tangentielle 30. Cette dernière est configurée pour aspirer de l'air afin de générer le flux d'air F traversant l'ensemble d'échangeurs de chaleur 23. La turbomachine tangentielle 30 comporte plus précisément une volute 44, formée par le premier boîtier collecteur 41 et au centre de laquelle est disposée une turbine. La volute 44 délimite au moins partiellement la sortie d'air 22b du flux d'air. Autrement dit, l'évacuation d'air de la volute 44 correspond à la sortie d'air 22b du flux d'air F du boîtier collecteur 41.

Dans l'exemple illustré sur la figure 2, la turbomachine tangentielle 30 est dans une position qui la rapproche de la face avant du véhicule automobile 10. Dans ce cas particulier, la sortie d'air 22b du flux d'air F est préférentiellement orientée vers l'arrière du véhicule automobile 10 de sorte que le flux d'air évacué par la sortie d'air 22b suit une direction sensiblement parallèle à celle de l'axe X.

Il est néanmoins possible d'imaginer d'autres positionnements de la turbomachine tangentielle 30 au sein du boîtier collecteur 41. Elle peut par exemple être disposée de telle sorte que la sortie d'air 22b du flux d'air est orientée vers la face avant du véhicule automobile 10. Alternativement, la turbomachine tangentielle 30 peut se situer au milieu de la face arrière du boîtier collecteur 41, par exemple pour des raisons d'intégration du module de refroidissement 22 dans son environnement. Ces alternatives ne sont pas illustrées.

Le module de refroidissement 22 comprend par ailleurs un moyen de fixation 25 dudit module 22 au châssis 17 du véhicule automobile 10. Ce moyen de fixation 25 est configuré pour permettre un positionnement du module de refroidissement 22 par rapport au châssis 17 du véhicule automobile 10 de sorte que la face avant 400 du carénage 40 soit disposée en vis-à-vis d'un soubassement 100 du véhicule automobile 10. Ce moyen de fixation 25 est disposé de part et d'autre du carénage 40, il est par ailleurs également configuré pour fixer le au moins un échangeur de chaleur 24, 26, 28 au module de refroidissement 22. Le moyen de fixation 25 permet aussi la fixation dudit module 22 et dudit au moins un échangeur de chaleur 24, 26, 28 au châssis 17 du véhicule automobile 10. Dans le cas où le module de refroidissement 22 comporte plusieurs échangeurs de chaleur 24, 26, 28, le moyen de fixation 25 permet également de positionner fixement l'ensemble 23 des échangeurs de chaleur 24, 26, 28 les uns par rapport aux autres, par exemple en assurant un empilement aligné desdits échangeurs de chaleur 24, 26, 28 à l'intérieur du carénage 40.

Selon un premier mode de réalisation du moyen de fixation 25, celui-ci comporte au moins une barre latérale 25' (visible sur la figure 2) fixée sur chaque paroi latérale 43 du carénage 40 du module de refroidissement 22. La au moins une barre latérale 25' est notamment orientée perpendiculairement au plan du au moins un échangeur de chaleur 24, 26, 28 et ledit au moins un échangeur de chaleur 24, 26, 28 est fixé sur ladite au moins une barre latérale 25'. Autrement dit, la ou les barres latérales 25' servent de support de fixation pour le au moins un échangeur 24, 26, 28 afin de maintenir celui-ci en place dans le conduit formé par le carénage 40. Par ailleurs, la ou les barres latérales 25' sont configurées pour être fixées au châssis 17 du véhicule automobile 10. Le nombre de barres latérales 25' est par exemple compris entre deux (une de chaque côté du module de refroidissement 22) et six (trois de chaque côté du module de refroidissement 22). Dans l'exemple illustré sur la figure 2, deux des quatre barres latérales 25' présentes dans cette variante du module de refroidissement 22 sont visibles.

La ou les barres latérales 25' et le moyen de fixation 25 plus généralement permettent de positionner l'ensemble 23 des échangeurs 24, 26, 28 entre eux et de les fixer au module 22, car l'orientation particulière dudit module 22 dans le véhicule 10 ne permet pas de fixer ledit module 22 et l'ensemble 23 des échangeurs 24, 26, 28 qu'il abrite directement sur le châssis 17 du véhicule 10. L'ensemble 23 des échangeurs 24, 26, 28 étant orientés non plus perpendiculairement à la poutre du châssis 17, mais empilé parallèlement à ladite poutre, la fixation du au moins un échangeur 24, 26, 28 requiert un moyen de fixation 25 fiable qui permet de maintenir le module de refroidissement 22 et son contenu dans cette orientation spécifique.

Les barres latérales 25' sont par exemple destinées à être fixées directement sur des poutres du châssis 17 passant de part et d'autre dudit module de refroidissement 22. Selon une variante de ce mode de réalisation du moyen de fixation 25, celui-ci comporte une pièce de liaison 25a destinée à relier les barres latérales 25' et les poutres du châssis 17 qui passent de part et d'autre du module de refroidissement 22, comme illustré notamment sur la figure 3. Une telle pièce de liaison 25a peut faciliter le maintien du module de refroidissement 22 et de ses composants à et la poutre du châssis 17, notamment dans le cas le carénage 40 à l'intérieur duquel se situe l'ensemble 23 des échangeurs de chaleurs 24, 26, 28 n'est pas situé à la même hauteur que la poutre du châssis 17. La pièce de liaison 25a peut venir de matière avec les barres latérales 25'.

En reprenant l'exemple de la figure 1 dans lequel le module de refroidissement 22 est illustré dans son état monté au sein du véhicule automobile 10, il apparaît qu'à l'état monté, la direction longitudinale L du module de refroidissement 22 peut être comprise dans un plan généré par l'axe vertical Z et un axe longitudinal du véhicule d'automobile 10, cet axe s'étendant parallèlement à la direction X. Selon un montage particulier, la direction longitudinale L du module de refroidissement 22 s'étend verticalement, c'est-à-dire parallèlement à la direction Z.

L'on peut également imaginer un ou plusieurs modes de réalisation dans lesquels le module de refroidissement 22 est incliné par rapport à la direction Z. L'on peut ainsi définir un angle d'inclinaison entre la direction longitudinale L du module de refroidissement 22 et la direction verticale Z, cet angle d'inclinaison est par exemple compris entre 5° et 45°. Ces alternatives d'inclinaison ne sont pas illustrées sur les figures.

Dans tous les cas, l'entrée d'air 22a du module de refroidissement 22 se situe en regard du soubassement 100 du véhicule automobile 10. L'entrée d'air 22a peut se présenter sous la forme d'au moins une ouverture d'aspiration O aménagée dans la face avant 400 du carénage 40 du module de refroidissement 22. La au moins une ouverture d'aspiration O est disposée en amont de l'échangeur de chaleur 24 juxtaposé à l'extrémité amont 40a. Le nombre d'ouvertures d'aspiration O formant l'entrée d'air 22a peut être compris entre un et dix. Les ouvertures d'aspiration O sont par exemple réparties équitablement sur la face avant 400. Dans le mode de réalisation illustré sur la figure 2, les ouvertures d'aspiration O sont au nombre de trois.

Le module de refroidissement 22 peut par ailleurs comporter au moins un dispositif d'obturation 42 mobile entre une position d'ouverture et une position de fermeture de ladite au moins une ouverture d'aspiration O. Le au moins un dispositif d'obturation 42 comporte au moins un volet pivotant 420 configuré pour pivoter autour d'un axe de pivotement A42. Ce au moins un volet pivotant 420 est alors destiné à obturer la au moins une ouverture d'aspiration O. Il peut notamment y avoir un volet pivotant 420 par ouverture d'aspiration O. Le ou les volets pivotants 420 peuvent être des volets papillons ou des volets drapeaux.

L'on peut plus particulièrement imaginer un mode de réalisation dans lequel le au moins un dispositif d'obturation 42 comporte une multitude de volets pivotants 420 ayant des tailles variées. Plus précisément, les volets pivotants 420 sont de taille croissante suivant la direction X indiquée sur l'ensemble des figures, comme illustré notamment sur la figure 2. Ainsi le volet pivotant 420 le plus proche du pare-chocs 16 du véhicule automobile 10 est le plus petit de l'ensemble des volets pivotant formant le dispositif d'obturation 42 tandis que le volet pivotant 420 le plus éloigné du pare-chocs 16 est le plus grand, comme illustré plus particulièrement sur la figure 2. La taille variée des volets pivotants 420 peut permettre une meilleure régulation du flux d'air F pénétrant au sein du module de refroidissement 22 à travers l'entrée d'air 22a.

En outre, le module de refroidissement 22 peut comporter une unité de pilotage (non représentée sur les figures) configurée pour piloter le dispositif d'obturation 42. L'unité de pilotage peut être configurée pour positionner et immobiliser le dispositif d'obturation 42 dans au moins une position intermédiaire lors d'un déplacement dudit dispositif d'obturation 42 entre sa position ouverte et sa position d'obturation. En position ouverte, le au moins un dispositif d'obturation 42 peut faire saillie par rapport à la face avant 400 du carénage 40 de sorte à former un déflecteur d'air destiné à dévier le flux d'air F pénétrant à travers la au moins une ouverture d'aspiration O vers l'intérieur du conduit du carénage 40.

L'angle d'inclinaison des volets pivotants 420 permet également de réguler le flux d'air F pénétrant à l'intérieur du module de refroidissement 22 par l'intermédiaire de l'entrée d'air 22a formée par la ou les ouvertures d'aspiration O au sein de la face avant 400 du carénage 40. Ainsi le flux d'air F circulant à travers le ou les échangeurs de chaleur 24, 26, 28 peut être ajusté en fonction des performances requises de la part desdits échangeurs de chaleur 24, 26, 28.

Par ailleurs, l'unité de pilotage peut être configurée pour piloter chaque volet pivotant 420 de manière indépendante. L'on peut ainsi imaginer des configurations où un ou plusieurs volets pivotants 420 obstruent l'ouverture d'aspiration O à laquelle ils sont rattachés tandis que d'autres volets pivotants 420 adoptent une position d'ouverture ou encore une position intermédiaire, influençant ainsi la quantité d'air traversant la ou les ouvertures d'aspiration O.

Les bords de la au moins une ouverture d'aspiration O destinés à venir en contact avec le ou les bords du dispositif d'obturation 42 peuvent comporter un ou plusieurs joints d'étanchéité. Le ou les joints d'étanchéité peuvent permettre d'absorber le choc de l'impact des bords du dispositif d'obturation 42 sur le ou les bords de la au moins une ouverture d'aspiration O lorsque dispositif d'obturation 42 amorce sa position de fermeture. Ce ou ces joints d'étanchéité peuvent être réalisés par surmoulage du ou des bords de la au moins une ouverture d'aspiration O. Alternativement, le ou les joints d'étanchéité peuvent être des pièces rapportées. Par ailleurs, le ou les bords du dispositif d'obturation 42 peuvent également comporter au moins un joint d'étanchéité. Ce au moins un joint peut être réalisé par surmoulage ou alors il peut être une pièce rapportée.

L'invention n'est pas limitée aux exemples de réalisation décrits en regard des figures et d'autres modes de réalisation, en accord avec les revendications, apparaîtront clairement à l'homme du métier. Notamment, les différents exemples peuvent être combinés, tant qu'ils ne sont pas contradictoires et restent dans le cadre de l'invention.

## Revendications

1. Module de refroidissement (22) pour véhicule automobile (10) à moteur (12) électrique ou hybride, ledit module de refroidissement (22) étant destiné à être traversé par un flux d'air (F) circulant entre une entrée d'air (22a) et une sortie d'air (22b) et comportant :
- un carénage (40) formant un conduit interne suivant une direction longitudinale (L) du module de refroidissement (22) à l'intérieur duquel est disposé au moins un échangeur de chaleur (24, 26, 28) destiné à être traversé par le flux d'air (F), le carénage (40) comportant une face avant (400) dans laquelle est aménagée l'entrée d'air (22a) située en amont du au moins un échangeur de chaleur (24, 26, 28) ;
- un boîtier collecteur (41) disposé en aval du carénage (40) suivant la direction longitudinale (L), ledit boîtier collecteur (41) étant configuré pour recevoir une turbomachine (30) elle-même configurée pour générer le flux d'air (F) destiné à être évacué par la sortie d'air (22b), **caractérisé en ce que** la turbomachine est une turbomachine tangentielle (30) et **en ce que** le module de refroidissement (22) comprend un moyen de fixation (25) disposé de part et d'autre du carénage (40), ledit moyen de fixation (25) permettant la fixation du au moins un échangeur de chaleur (24, 26, 28) au module de refroidissement (22) et permettant la fixation dudit module (22) et du au moins un échangeur de chaleur (24, 26, 28) à un châssis (17) d'un véhicule automobile (10) de sorte que la face avant (400) du carénage (40) soit disposée en vis-à-vis d'un soubassement (100) du véhicule automobile (10).

2. Module de refroidissement selon la revendication précédente, **caractérisé en ce que** le moyen de fixation (25) comporte au moins une barre latérale (25') fixée sur chaque paroi latérale (43) du carénage (40), ladite barre latérale (25') étant orientée perpendiculairement au plan du au moins un échangeur de chaleur (24,26,28), ledit au moins un échangeur de chaleur étant fixé auxdites barres latérales (25'), lesdites barres latérales (25') étant configurées pour être fixées d'autre part avec le châssis (17) du véhicule automobile (10).

3. Module de refroidissement selon la revendication 2, caractérisé que les barres latérales (25') sont destinées à être fixées directement sur des poutres du châssis (17) passant de part et d'autre dudit module de refroidissement (22).

4. Module de refroidissement selon la revendication 2, caractérisé que le moyen de fixation (25) comporte une pièce de liaison (25a) destinée à relier les barres latérales (25') et des poutres du châssis (17) passant de part et d'autre dudit module de refroidissement.

5. Module de refroidissement (22) selon l'une quelconque des revendications précédentes, **caractérisé en ce que** l'entrée d'air (22a) se présente sous la forme d'au moins une ouverture d'aspiration (O) aménagée dans la face avant (400) du carénage (40) du module de refroidissement (22) et **en ce que** le module de refroidissement (22) comporte au moins un dispositif d'obturation (42) mobile entre une position d'ouverture et une position de fermeture de ladite au moins une ouverture d'aspiration (O).

6. Module de refroidissement (22) selon la revendication précédente, **caractérisé en ce que** le au moins un dispositif d'obturation (42) comporte au moins un volet pivotant (420) configuré pour pivoter autour d'un axe de pivotement (A42) et destiné à obturer la au moins une ouverture d'aspiration (O).

7. Module de refroidissement (22) selon l'une quelconque des revendications 5 à 6, **caractérisé en ce qu'**il comporte une unité de pilotage configurée pour piloter le dispositif d'obturation (42).

8. Véhicule automobile **caractérisé en ce qu'**il comprend un module de refroidissement (22) selon l'une quelconque des revendication précédentes et **caractérisé en ce qu'**à l'état monté, la direction longitudinale (L) du module de refroidissement (22) est comprise dans un plan généré par un axe vertical (Z) et un axe longitudinal (X) d'un trièdre (XYZ) rattaché au véhicule d'automobile (10).

9. Véhicule automobile selon la revendication précédente **caractérisé en ce qu'**à l'état monté, la direction longitudinale (L) du module de refroidissement (22) s'étend verticalement.

10. Véhicule automobile selon l'une quelconque des revendication 8 à 9 **caractérisé en ce que** le soubassement (100) est pourvu d'au moins une ouverture disposée en regard de l'entrée d'air (22a) du module de refroidissement (22) de manière à permettre la circulation d'un flux d'air (F) depuis l'extérieur du véhicule automobile (10) à l'intérieur du module de refroidissement (22).

## Patentansprüche

1. Kühlmodul (22) für ein Kraftfahrzeug (10) mit einem elektrischen oder Hybridmotor (12), wobei das Kühlmodul (22) dazu bestimmt ist, von einem Luftstrom (F) durchströmt zu werden, der zwischen einem Lufteinlass (22a) und einem Luftauslass (22b) zirkuliert und umfasst:
• eine Verkleidung (40), die einen inneren Kanal entlang einer Längsrichtung (L) des Kühlmoduls (22) bildet, in dem mindestens ein Wärmetauscher (24, 26, 28) angeordnet ist, der vom Luftstrom (F) durchströmt werden soll, wobei die Verkleidung (40) eine Vorderseite (400) aufweist, in der sich der Lufteinlass (22a) stromaufwärts des mindestens einen Wärmetauschers (24, 26, 28) befindet;
• ein Sammlergehäuse (41), das stromabwärts der Verkleidung (40) entlang der Längsrichtung (L) angeordnet ist, wobei das Sammlergehäuse (41) dazu konfiguriert ist, eine Tangentialturbine (30) aufzunehmen, die selbst dazu konfiguriert ist, den Luftstrom (F) zu erzeugen, der durch den Luftauslass (22b) ausgestoßen werden soll,
**dadurch gekennzeichnet, dass** die Turbine eine Tangentialturbine (30) ist und dass das Kühlmodul (22) ein Befestigungsmittel (25) umfasst, das auf beiden Seiten der Verkleidung (40) angeordnet ist, wobei das Befestigungsmittel (25) die Befestigung des mindestens einen Wärmetauschers (24, 26, 28) am Kühlmodul (22) und die Befestigung des Moduls (22) und des mindestens einen Wärmetauschers (24, 26, 28) an einem Fahrgestell (17) eines Kraftfahrzeugs (10) ermöglicht, so dass die Vorderseite (400) der Verkleidung (40) einem Unterboden (100) des Kraftfahrzeugs (10) zugewandt angeordnet ist.

2. Kühlmodul nach dem vorhergehenden Anspruch, **dadurch gekennzeichnet, dass** das Befestigungsmittel (25) mindestens eine Seitenstange (25') umfasst, die an jeder Seitenwand (43) der Verkleidung (40) befestigt ist, wobei die Seitenstange (25') senkrecht zur Ebene des mindestens einen Wärmetauschers (24, 26, 28) ausgerichtet ist, wobei der mindestens eine Wärmetauscher an den Seitenstangen (25') befestigt ist, wobei die Seitenstangen (25') auch dazu ausgelegt sind, am Fahrgestell (17) des Kraftfahrzeugs (10) befestigt zu werden.

3. Kühlmodul nach Anspruch 2, **dadurch gekennzeichnet, dass** die Seitenstangen (25') dazu bestimmt sind, direkt an Trägern des Fahrgestells (17) auf beiden Seiten des Kühlmoduls (22) befestigt zu werden.

4. Kühlmodul nach Anspruch 2, **dadurch gekennzeichnet, dass** das Befestigungsmittel (25) ein Verbindungsteil (25a) umfasst, das dazu bestimmt ist, die Seitenstangen (25') und Träger des Fahrgestells (17) auf beiden Seiten des Kühlmoduls zu verbinden.

5. Kühlmodul (22) nach einem der vorhergehenden Ansprüche, **dadurch gekennzeichnet, dass** der Lufteinlass (22a) mindestens eine Saugöffnung (O) ist, die in der Vorderseite (400) der Verkleidung (40) des Kühlmoduls (22) ausgebildet ist, und dass das Kühlmodul (22) mindestens eine Sperrvorrichtung (42) umfasst, die zwischen einer Öffnungsposition und einer Schließposition der mindestens einen Saugöffnung (O) beweglich ist.

6. Kühlmodul (22) nach dem vorhergehenden Anspruch, **dadurch gekennzeichnet, dass** die mindestens eine Sperrvorrichtung (42) mindestens eine Schwenkklappe (420) umfasst, die dazu ausgelegt ist, um eine Schwenkachse (A42) zu schwenken und die mindestens eine Saugöffnung (O) zu blockieren.

7. Kühlmodul (22) nach einem der Ansprüche 5 oder 6, **dadurch gekennzeichnet, dass** es eine Steuereinheit umfasst, die dazu ausgelegt ist, die Sperrvorrichtung (42) zu steuern.

8. Kraftfahrzeug, **dadurch gekennzeichnet, dass** es ein Kühlmodul (22) nach einem der vorhergehenden Ansprüche umfasst und dass im montierten Zustand die Längsrichtung (L) des Kühlmoduls (22) in einer Ebene enthalten ist, die von einer vertikalen Achse (Z) und einer Längsachse (X) eines mit dem Kraftfahrzeug (10) verbundenen Dreiecks (XYZ) erzeugt wird.

9. Kraftfahrzeug nach dem vorhergehenden Anspruch, **dadurch gekennzeichnet, dass** im montierten Zustand die Längsrichtung (L) des Kühlmoduls (22) vertikal ist.

10. Kraftfahrzeug nach einem der Ansprüche 8 oder 9, **dadurch gekennzeichnet, dass** der Unterboden (100) mit mindestens einer Öffnung versehen ist, die so angeordnet ist, dass sie dem Lufteinlass (22a) des Kühlmoduls (22) gegenüberliegt, um einen Luftstrom (F) von außerhalb des Kraftfahrzeugs (10) in das Kühlmodul (22) zirkulieren zu lassen.

## Claims

1. Cooling module (22) for a motor vehicle (10) with an electric or hybrid engine (12), said cooling module (22) being intended to be traversed by an airflow (F) circulating between an air inlet (22a) and an air outlet (22b) and comprising:
- a fairing (40) forming an internal duct along a longitudinal direction (L) of the cooling module (22) inside which is arranged at least one heat exchanger (24, 26, 28) intended to be traversed by the airflow (F), the fairing (40) comprising a front face (400) in which the air inlet (22a) is located upstream of the at least one heat exchanger (24, 26, 28);
- a collector housing (41) arranged downstream of the fairing (40) along the longitudinal direction (L), said collector housing (41) being configured to receive a tangential turbomachine (30) itself configured to generate the airflow (F) intended to be discharged by the air outlet (22b),
**characterized in that** the turbomachine is a tangential turbomachine (30) and **in that** the cooling module (22) comprises a fastening means (25) arranged on either side of the fairing (40), said fastening means (25) allowing the fastening of the at least one heat exchanger (24, 26, 28) to the cooling module (22) and allowing the fastening of said module (22) and the at least one heat exchanger (24, 26, 28) to a chassis (17) of a motor vehicle (10) so that the front face (400) of the fairing (40) is arranged facing an underbody (100) of the motor vehicle (10).

2. Cooling module according to the preceding claim, **characterized in that** the fastening means (25) comprise at least one side bar (25') fastened to each side wall (43) of the fairing (40), said side bar (25') being oriented perpendicular to the plane of the at least one heat exchanger (24,26,28), said at least one heat exchanger being fastened to said side bars (25'), said side bars (25') also being designed to be fastened to the chassis (17) of the motor vehicle (10).

3. Cooling module according to Claim 2, **characterized in that** the side bars (25') are intended to be fastened directly to beams of the chassis (17) on both sides of said cooling module (22).

4. Cooling module according to Claim 2, **characterized in that** the fastening means (25) comprise a connecting part (25a) intended to connect the side bars (25') and beams of the chassis (17) on both sides of said cooling module.

5. Cooling module (22) according to any one of the preceding claims, **characterized in that** the air inlet (22a) is at least one suction opening (O) formed in the front face (400) of the fairing (40) of the cooling module (22), and **in that** the cooling module (22) comprises at least one blocking device (42) that is movable between a position opening and a position closing said at least one suction opening (O).

6. Cooling module (22) according to the preceding claim, **characterized in that** the at least one blocking device (42) comprises at least one pivoting flap (420) that is designed to pivot about a pivot axis (A42) and to block the at least one suction opening (O).

7. Cooling module (22) according to either one of Claims 5 or 6, **characterized in that** it comprises a control unit designed to control the blocking device (42).

8. Motor vehicle **characterized in that** it comprises a cooling module (22) according to any one of the preceding claims and **in that**, when assembled, the longitudinal direction (L) of the cooling module (22) is contained within a plane generated by a vertical axis (Z) and a longitudinal axis (X) of a trihedron (XYZ) associated with the motor vehicle (10).

9. Motor vehicle according to the preceding claim, **characterized in that**, when assembled, the longitudinal direction (L) of the cooling module (22) is vertical.

10. Motor vehicle according to either one of Claims 8 or 9, **characterized in that** the underbody (100) is provided with at least one opening arranged to face the air inlet (22a) of the cooling module (22) to enable an airflow (F) to circulate from outside the motor vehicle (10) into the cooling module (22).
